# EUROPEAN PATENT APPLICATION

(11) **EP 4 614 374 A1**
(43) Date of publication of application: **10.09.2025**
(21) Application number: 24161878.4
(22) Date of filing: 06.03.2024
(51) Int. Cl.: G06F 21/62, G06F 3/01

(54) **METHOD AND SYSTEM FOR SELECTIVE OBJECT RENDERING IN METAVERSE**

(71) Applicant: Unify Beteiligungsverwaltung GmbH & Co. KG, 81739 München (DE)
(72) Inventor: Ioannidou, Katerina, 15127 Melissia (GR); Tsiatsikas, Zisis, 55534 Thessaloniki (GR); Sdrallis, Michail, 15238 Chalandri (GR); Grigoropoulos, Charalampos, 15234 Chalandri (GR)
(74) Representative: Schaafhausen, Anne

(57) **Abstract**

The invention relates to a method and system for selective object rendering in Metaverse, wherein the method comprises performing, by a first, a second and/or any further user in a Metaverse an action, analyzing, by a Metaverse server, the performed action by the first, the second or any further user to identify a private or sensitive object, rendering, by the Metaverse server the private or sensitive object and sending, by the Metaverse server the rendered private or sensitive object to the first, the second and/or any further user only in the case that the first, the second and/or any further user has access rights to view the rendered private or sensitive object.

## Description

The present invention relates to a method and a system for selective object rendering in Metaverse.

The Metaverse is a concept in which a digital space is created through the interaction of virtual, augmented and physical reality. The main aspect is to unite the different spaces of action on the Internet into one reality. The concept is often described with a strong focus on virtual sociality; a future iteration of the internet in the form of persistent, shared, virtual 3D spaces that are connected to form a perceived virtual universe. These are intended to enable individualization and everyday activities to a comparable extent to physical reality.

Although not widely famous or adopted by many companies, the future of virtual meetings is via augmented and virtual reality. That is, using metaverse technology. Metaverse, currently used by many gaming industries, is advancing fast and it requires the use of specific virtual reality headsets, in order for the Metaverse to be accessed.

One of the technological challenges of Metaverse, however, is 3D object rendering. The more detailed the metaverse world/scene, the more resources are required for rendering. On top of that, if an object is moving/changing in the metaverse world, it requires far more resources than when it is static. The more people (i.e. avatars in a virtual meeting room) the harder the rendering. For this specific reason, rendering is not happening by a single user device, but rather from server farms so that the work is split between different device/resources. At the end, the server farms render the objects and the scene and relay back the information to the clients in the form of streams.

Therefore, the present invention is based on the object to provide a method and a corresponding system for selective object rendering in the Metaverse. In particular, a method and a system which are capable of identifying objects to be rendered only for a certain type of user and reducing the rendering effort and resources of servers of the Metaverse to render 3D objects.

This object is solved by a method having the features according to claim 1, a system having the features of claim 7, a program product having the features of claim 13 and a computer-readable medium comprising program code having the features of claim 14. Preferred embodiments of the invention are defined in the respective dependent claims.

According to the invention, a method for selective object rendering in Metaverse is provided, wherein the method comprises the steps of:
- performing an action, by a first, a second and/or any further user in a Metaverse;
- analyzing, by a Metaverse server, the performed action by the first, the second or any further user to identify a private or sensitive object;
- rendering, by the Metaverse server, the private or sensitive object, and
- sending, by the Metaverse server the rendered private or sensitive object to the first, the second and/or any further user only in the case that the first, the second and/or any further user have access rights to view the rendered private or sensitive object.

According to the invention, a private or sensitive object is any object which contains personal or sensitive details. This can be, for example, credit card data, bank data, other payment data (e.g. PayPal etc.), medical data or other personal data. In particular, it is data or information that is not usually shared with the general public. Moreover, the term private/sensitive data refers to pieces of information which could be used to uniquely track a data subject in a group of people.

According to a preferred embodiment, the step of analyzing the performed action of the first user is triggered by detecting a sound level below or above a predefined threshold, by tracking the movements of the head and eyes of the first, the second and/or any further user, by tracking of pupil center corneal reflection, PCCR, of the first, the second and/or any further user, by body moving of the first, the second and/or any further user to each other, by the spatial proximity of the first, the second and/or any further user to each other, by the affiliation of the first, the second and/or any further user to a common group of users, or upon detection of any gesture of the first, the second and/or any further user which indicates that the performed action is private or sensitive.

In the sense of the invention, detecting a sound level below or above a predefined threshold indicates that users talk in a certain way. For example, if the users whisper, this is interpreted as meaning that the users either do not want to disturb others or are exchanging a secret with each other or are talking about matters that should not be shared with the other users, for example in a meeting or an online lecture. For example, whispering can have a decibel value of around 30 db, while a normal conversation can be measured at around 60 db.

In the sense of the invention, affiliation to a common group of users means that the users belong to a certain collective group.

This can be, for example, a user group with predefined rights or simply the division of users into two groups, with some belonging to the first group and others to the second group, for example to do something in teamwork.

According to another preferred embodiment, the step of analyzing the performed action of the first, the second and/or any further user further comprises using a machine learning, ML, module and/or an artificial intelligence, Al, module.

According to still another preferred embodiment, before the step of sending the rendered private or sensitive object, the method further comprises separately setting, by the first, the second and/or any further user the access rights to view the rendered private or sensitive object.

Further, according to a preferred embodiment, the step of analyzing the performed action of the first user further comprises identifying, by the metaverse server a private conversation between the first user, the second user and/or any further user the method further comprises:
- locally rendering, by a device of the first, the second and/or any other user, the private or sensitive object;
- sending, by the device of the first, the second and/or any further user, the rendered private or sensitive object to the first, the second or any further user only that are part of the private conversation.

In the sense of the invention, a private conversation or activity can be one where at least one party would not reasonably want or expect to be overheard or observed by anyone aside from those present. Indicators of such a private conversation can for example be whispering between people or putting heads together. However, it is also possible for a private conversation to take place between two or more people and for others to overhear, but for details to be exchanged that are only relevant between the participants in the private conversation. The latter usually disturbs others so that whispering often takes place here too.

According to yet another preferred embodiment, the step of analyzing the performed action of the first user further comprises deep learning and /or image similarity methods. The analysis of a performed action may for example be achieved with object detection techniques. Object detection techniques are computer vision techniques in which a software system can detect, locate, and trace the object aka an action from a given image or video. The special attribute about object detection is that it identifies the class of object (person, table, chair, etc.) and their location-specific coordinates in the given image.

The location can be pointed out by drawing a bounding box around the object. The bounding box may or may not accurately locate the position of the object. The ability to locate the object inside an image defines the performance of the algorithm used for detection. Face detection is one of the examples of object detection. Such object detection algorithms might be pre-trained or can be trained from scratch. In most use cases, pre-trained weights from pre-trained models are used and then fine-tuned as per the requirements and different use cases. For these aforementioned purposes program libraries like Tensorflow (https://github.com/tensorflow) and Keras can be used. These open-source libraries for numerical computation and large-scale machine learning ease the process of acquiring data, training models, serving predictions, and refining future results. Thereby, for example, Tensorflow bundles together Machine Learning and Deep Learning models and algorithms.

According to the invention, a system is provided, wherein the system is configured to perform the steps of the method for selective object rendering in Metaverse.

According to a preferred embodiment, the system comprises a Metaverse server and a first, a second and/or any further user device.

In the sense of the invention, a user device is primarily a device with which the user normally acts, communicates, etc. in the metaverse. For example, this can be virtual reality VR glasses or a VR headset. Such devices may also comprise other accessories such as special gloves, helmets, or suits. These devices also comprise ordinary smartphones, mobile computers, PCs, servers, and the like. In addition, such devices comprise microphones, loudspeakers, cameras, and other sensors such as haptic sensors or tactile sensors.

According to another preferred embodiment, the system further comprises a machine learning, ML, module and/or an artificial intelligence, Al, module analyze the performed action.

According to still another preferred embodiment, the machine learning, ML, module, the artificial intelligence, Al, module is an internal component of the metaverse server, an external component, a cloud module, a software as a service, SaaS.

Further, according to a preferred embodiment, the system further comprises a rendering server or an application to render the private or sensitive object.

According to yet another preferred embodiment, the rendering server or application is part of the Metaverse server or is part of the first, the second and/or any further user device or is a Software as a Service, SaaS, or a cloud server.

According to yet another aspect of the present invention, a program element is provided, which when being executed by a processor, is adapted to carry out steps of the method for selective object rendering in Metaverse according to any one of the previous embodiments.

According to another aspect of the present invention, a computer-readable medium comprising program code is provided, which when being executed by a processor, is adapted to carry out steps of the method for selective object rendering in Metaverse according to any one of the previous embodiments.

A computer-readable medium may be a floppy disk, a hard disk, an USB (Universal Serial Bus) storage device, a RAM (Random Access Memory), a ROM (read only memory) or an EPROM (Erasable Programmable Read Only Memory). A computer readable medium may also be a data communication network, e. g. the Internet, which may allow downloading a program code.

It has also to be noted that aspects of the invention have been described with reference to different subject-matter. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular, combinations between features relating to the apparatus type claims and features relating to the method type claims are considered to be disclosed. In addition, features relating to one of the embodiments may be combined with other features of another embodiment, the drawings or the claims, where possible. The invention and embodiments thereof will be described below in further detail in example scenarios and in connection with the drawing.

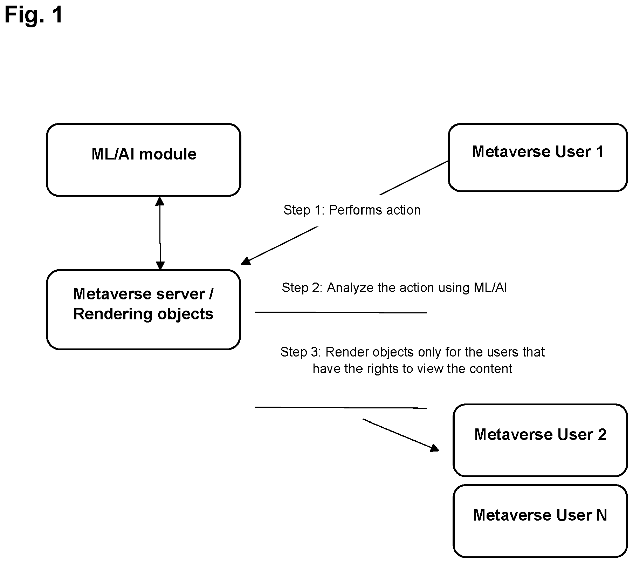

- Fig. 1: shows in a schematic illustration an abstract overview of the proposed method according to an embodiment of the invention.

### Example scenario 1 - Whispering and access control in the Metaverse

In this scenario, the rendering is performed in the server farms. This first use case mimics a virtual meeting room, perhaps a university lecture room with many users participating in the virtual lecture, reflected in the metaverse world. At some point within the class, Alice who is located next to Bob, is whispering in her ear about the fact of buying the book that the teacher has just mentioned. The system identifies the whispering activity by taking into consideration the low volume the sentence was spoken from Alice to Bob, the short distance between the two students and also, the body position of the student who has started the whispered sentence (the fact that student #1 leaned towards student #2). At the same time, Bob, who also wants the book, asks Alice to also buy a copy for her and presents her credit card for Alice to make the payment for the second book.

At this scenario the method will act as follows:
1. When a whispered activity is identified, the server will render the voice information. As it is a whisper between two parties, access rights to the whisper will only be given to Alice and Bob. The rest of the students will not hear this rendered information (i.e., the information will not be sent from the rendering server to their virtual reality headsets). This sub-scenario has a special meaning when the spoken information is reflected on an object that needs to be rendered, even if this is not present at the metaverse world at the specific moment. For example, a user discusses about the meteorological information's (e.g. meteo metrics) in the current region, and an object is rendered on the metaverse server in order to get broadcasted to the rest of the devices (i.e., create a graphic rendered object with the meteorological information's). In this case at hand, the selective rendering will be done taking into account the actual whisper, i.e., the sound level and the recipients of the sound, i.e., the participants in the same room. The sound level, i.e., whisper, will also reflect the access rights to the specific information being communicated.
2. When the credit card is taken out of the wallet by Alice, the server that is rendering the virtual reality objects will understand that this is classified data (sensitive data) for example by using an object detection technique like Tensorflow (https://github.com/tensorflow) or else and will only show (i.e., selective rendering) this object to the person, recipient that is intended to. The remaining of the class will not be allowed access to that object. The technology behind confidential data identification can be done with the use of deep learning and the widely used image similarity methods.

It has to be mentioned that although in the above example, access rights were given to whispered information and a credit card, the use case can be extended to any other scenario where sensitive information is exchanged. For example, when paying at the grocery store, accessing a room, a meeting, etc. In addition, it could be seen, that the accessed data is propagated from the servers to two parties only.

However, the methodology can be extended to include a group or even groups of people. Considering the same use case, an example would be, when the class is split into groups to do an exercise and then each group presents the results to the rest of the class. During the group-work time, information of group A will only be shared among its members. The same goes for group B, C, etc.

Fig. 1 offers an abstract overview of the proposed method. The main idea capitalizes on the selective rendering of 3D objects on a metaverse server, by sending accordingly the relevant streams to the respective users. The proposed functionality can analyze and classify if an object is private/sensitive, and/or if a sound is whispered in the metaverse. This case can be used as a trigger, to selectively render 3D objects that will be sent to specific users/recipients, always with the perspective of controlling the access of certain content.

### Example scenario 2: Metaverse resource optimization

In this scenario, the rendering is performed in the user devices. For this scenario, it is assumed that a few people are present in a meeting room. Two participants, Alice and Bob, are sitting with some distance to each other. Maybe there are a few other participants in between them or they may be sitting opposite one another. At some point Alice was not able to finish copying the diagram the presenter was presenting. She is, hence, asking for Bob to show her the diagram from his notes so that she can copy. This communication is done by Alice's lifting of her head and looking towards Bob, as well as whispering to him. The system tracks her head and eye movements (e.g. through pupil center corneal reflection PCCR) to identify that she is referring to Bob. As a result, Bob is showing her the notes by lifting them from his desk. At that time, the rendering server understands that there is a private conversation between parties, and it gives a signal to the users' headsets (i.e. Alice's and Bob') to do the rendering of the object locally rather than for the activity to take place in the rendering server, thus saving rendering resources. This, in turn, means that the notes that are shared from Bob and Alice are only accessible by these two people and not the rest of the meeting participants.

In this scenario, the focus is not on the access control aspect, but on optimizing the rendering process in the user devices. This can be achieved if the devices know which objects are necessary to be rendered locally.

Thus, by avoiding the local rendering of redundant objects, resources on the user devices are saved. This can be achieved, for example if the server which coordinates the information between the clients, selectively communicates which objects are necessary or not.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

## Claims

1. A method for selective object rendering in Metaverse, wherein the method comprises the steps of:
- Performing an action, by a first, a second and/or any further user in a Metaverse;
- Analyzing, by a Metaverse server, the performed action by the first, the second or any further user to identify a private or sensitive object;
- rendering, by the Metaverse server, the private or sensitive object; and
- sending, by the Metaverse server, the rendered private or sensitive object to the first, the second and/or any further user only in the case that the first, the second and/or any further user has access rights to view the rendered private or sensitive object.

2. The method according to claim 1, wherein the step of analyzing the performed action of the first user is triggered by detecting a sound level below or above a predefined threshold, by tracking the movements of the head and eyes of the first, the second and/or any further user, by tracking of pupil center corneal reflection, PCCR, of the first, the second and/or any further user, by body moving of the first, the second and/or any further user to each other, by the spatial proximity of the first, the second and/or any further user to each other, by the affiliation of the first, the second and/or any further user to a common group of users, or upon detection of any gesture of the first, the second and/or any further user which indicates that the performed action is private or sensitive.

3. The method according to any one of the preceding claims, wherein the step of analyzing the performed action of the first, the second and/or any further user further comprises using a machine learning, ML, module and/or an artificial intelligence, Al, module.

4. The method according to any one of the preceding claims, wherein before the step of sending the rendered private or sensitive object, the method further comprises separately setting, by the first, the second and/or any further user, the access rights to view the rendered private or sensitive object.

5. The method according to any one of the preceding claims, wherein the step of analyzing the performed action of the first user further comprises identifying, by the metaverse server, a private conversation between the first user, the second user and/or any further user, the method further comprising:
- rendering, by a device of the first, the second and/or any other user, the private or sensitive object locally;
- sending, by the device of the first, the second and/or any further user, the rendered private or sensitive object to the first, the second or any further user only that are part of the private conversation.

6. The method according to any one of the preceding claims, wherein the step of analyzing the performed action of the first user further comprises deep learning and /or image similarity methodologies.

7. A system for selective object rendering in Metaverse, wherein the system is configured to perform the steps of the method according to any of the claims 1 to 6.

8. The system according to claim 7, wherein the system comprises:
- a Metaverse server; and
- a first, a second and/or any further user device.

9. The system according to any one of the claims 7 to 8, wherein the system further comprises a machine learning, ML, module and/or an artificial intelligence, Al, module to analyze the performed action.

10. The system according to claim 9, wherein the machine learning, ML, module, the artificial intelligence, Al, module is an internal component of the metaverse server, an external component, a cloud module, a software as a service, SAAS.

11. The system according to any one of the claims 7 to 10, wherein the system further comprises a rendering server or application to render the private or sensitive object.

12. The system according to any one of the claims 7 to 11, wherein the rendering server or application is part of the Metaverse server or is part of the first, the second and/or any further user device or is a Software as a Service, SaaS, or a cloud server.

13. A program element which when being executed by a processor, is adapted to carry out steps of the method for selective object rendering in Metaverse according to any one of the claims 1 to 6.

14. A computer-readable medium comprising program code, which when being executed by a processor, is adapted to carry out steps of the method for selective object rendering in Metaverse according to any one of the claims 1 to 6.
